(19) Europäisches Patentamt
European Patent Office
Office européen des brevets

(11) **EP 4 764 018 A1**

(12) **EUROPEAN PATENT APPLICATION**

(43) Date of publication:
**24.06.2026 Bulletin 2026/26**

(21) Application number: **25217018.8**

(22) Date of filing: **19.11.2025**

(51) International Patent Classification (IPC):
**C22C 28/00** (2006.01)   F16K 25/00 (2006.01)
F16K 17/38 (2006.01)   A62C 37/12 (2006.01)

(52) Cooperative Patent Classification (CPC):
**C22C 28/00; F16K 17/383; F16K 25/005;**
A62C 37/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **17.12.2024 JP 2024220897**

(71) Applicant: **Senju Metal Industry Co., Ltd.
Tokyo 120-8555 (JP)**

(72) Inventor: **DEI, Kanta
Tokyo, 120-8555 (JP)**

(74) Representative: **Zimmermann & Partner
Patentanwälte mbB
P.O. Box 330 920
80069 München (DE)**

(54) **ALLOY, FUSIBLE PLUG, AND SPRINKLER HEAD**

(57)    [Problem] Provided are an alloy having a high Vickers hardness with an endothermic peak temperature of 85 to 90°C obtained from a DSC curve, a fusible plug having an operating temperature of 85 to 90°C, and a sprinkler head having an operating temperature of 85 to 90°C.

[Solution Means] Alloy has an alloy composition consisting of, by mass%, Bi: 47.0 to 49.0%, Sb: 0.8 to 1.2%, and the balance In. In addition, the fusible plug and the sprinkler head respectively contain this alloy and have an operating temperature of 85 to 90°C.

# Fig. 2

## Description

Technical Field

The present invention relates to an alloy, a fusible plug, and a sprinkler head.

Background Art

Conventionally, a large-sized refrigeration apparatus includes a safety device such as a fusible plug as a mechanism for preventing damage or breakage of a refrigerator in accordance with Article 7, paragraph (1), item (viii) of the Regulation on Safety of Refrigeration issued by the Ministry of Economy, Trade and Industry. The safety device is operationally designed to be suitable for the refrigerant to be used.

As a refrigerant used in a refrigeration apparatus, etc., an HCFC (hydro, chloro, fluorocarbons)-based refrigerant, and in addition, an HFC (hydro, fluoro-carbons)-based refrigerant having a low ozone depletion potential are used. When the refrigerant is used in the refrigeration apparatus, the refrigerant is condensed, so that the pressure increases and the temperature also increases according to the Boyle-Charles' laws. Further, the rising temperature varies depending on the type of refrigerant. Therefore, the operating temperature of the fusible plug is determined according to the type of the refrigerant.

For example, HCFC22 (R22) can be cited as the refrigerant with the highest demand among HCFC-based refrigerants currently in use. When this refrigerant is used, since the condensation pressure is 1.94 MPa, the critical temperature of R22 is 96.2°C. When this refrigerant is used, a fusible plug having an operating temperature range of about 95 to 100°C is applied.

In addition, when the HFC-based refrigerant R407C is used, the condensation pressure is 2.11 MPa, so that the critical temperature of R407C is 85.6°C. For this reason, a fusible plug having an operating temperature range of about 90 to 95°C is applied. Further, when the HCFC-based refrigerant R410a having high compression efficiency is selected as the refrigerant for the refrigeration apparatus, since the condensation pressure of the refrigerant is 3.06 MPa, the critical temperature of R410a is 71.5°C. When this refrigerant is used, a fusible plug having an operating temperature range of 70 to 75°C is applied.

As described above, various low melting point alloys are used for the fusible plug having various operating temperature ranges. For example, Patent Document 1 discloses a Zn-Bi-In alloy used for a fusible plug that operates at 70 to 75°C and 95 to 100°C. In the same document, Sb is disclosed as an optional element in order to improve creep characteristics.

Patent Document 2 discloses a Bi-Sb(-Sn)-In solder alloy having a melting temperature of 72±2°C. The same document also discloses that Sb improves creep characteristics. Patent Document 3 discloses an In-Cu-Sb-Bi alloy that operates at 69 to 75°C. The alloy described in the same document must not contain Sn, and in addition, improvement of creep characteristics has been studied as in Patent Documents 1 and 2.

Citation List

Patent Document

[Patent Document 1] Japanese Patent Publication No. 4032094
[Patent Document 2] Japanese Unexamined Patent Application Publication No. 2022-137831
[Patent Document 3] Japanese Unexamined Patent Application Publication No. 2011-127776

Summary of Invention

Technical Problem

In Patent Document 1, R407C is used as a refrigerant having a low ozone depletion potential, and an alloy having an operating temperature of 90 to 95°C is used. However, the HFC-based refrigerant containing R407C has a drawback that it has a high global warming potential (GWP). For this reason, in the Kigali amendment of the Montreal Protocol in 2016, a stepwise goal was set to reduce HFC-based refrigerants by 85% in terms of $CO_2$ equivalent by 2036.

As this stepwise goal, replacement with a refrigerant having a GWP of 1500 or less by 2025 is scheduled in refrigerators, etc., in which R407C is used in accordance with the Act on Rational Use and Appropriate Management of Fluorocarbons in Japan. However, the GWP for R407C is 1770, and this stepwise goal cannot be achieved. An HCFC-based refrigerant R410a is assumed to be used in Patent Documents 2 and 3 from its critical temperature. However, the GWP of this refrigerant is 2090, and similarly to R407C, this stepwise goal cannot be achieved.

Accordingly, one of alleged alternative refrigerants is R448A. The GWP for this refrigerant is 1380, and the target GWP value by 2025 could be achieved therewith. However, the critical temperature of R448A is 83.7°C, which is 2°C less than 85.6°C of R407C used in Patent Document 1.

For the fusible plug to operate normally, the difference of 2°C in critical temperature is extremely large. Setting the operating temperature to fall in a range of from 90 to 95°C using R448A can cause malfunctions. In addition, when the operating temperature of R448A is set to this temperature range, the internal pressure increases, and there is a possibility that the alloy used for the fusible plug cannot withstand the internal pressure.

As described above, in order to obtain a fusible plug to be applied to R448A having both a low ozone depletion potential and a low GWP, an alloy having an operating temperature of 85 to 90°C is required. Further, in order for the operating temperature to fall within this temperature range, an alloy having an endothermic peak of 85 to 90°C in the thermal history (hereinafter, referred to as a "DSC curve") obtained by differential scanning calorimetry is required.

However, in the invention described in Patent Documents 1 to 3, the mechanical characteristics at the operating temperature in this temperature range are not evaluated. In addition, in these documents, creep characteristics are evaluated on the assumption that a situation in which the internal pressure is high for a long time is maintained. Indeed, in view of the condensation pressure of the refrigerant, it is appropriate to evaluate the creep characteristics.

However, with recent global warming, refrigeration apparatus is increasingly required to deliver quick freezing performance. Along with this, since the application rate of the condensation pressure rapidly increases, high hardness of the alloy is also required in addition to creep characteristics. Further, also when used in a sprinkler head, it is required to improve the hardness of a fusible alloy. As described above, in view of the above stepwise goal for suppressing global warming in recent years, and the actual situation of the refrigeration apparatus, as well as the sprinkler head, it is urgent to provide an alloy having a predetermined operating temperature range and high hardness.

Therefore, an object of the present invention is to provide an alloy having a high Vickers hardness with an endothermic peak temperature of 85 to 90°C obtained from a DSC curve, a fusible plug having an operating temperature of 85 to 90°C, and a sprinkler head having an operating temperature of 85 to 90°C.

Solution to Problem

The present inventors have re-examined the alloys specifically disclosed in Patent Documents 1 to 3. As the alloy disclosed in Patent Document 1, four compositions of an In-48Bi-1Sb-0.2Zn alloy (the numerical values represent by mass%; the same applies to the following, and hereinafter, the composition is referred to as a "first composition") disclosed in Example 9 of Table 2 of Patent Document 1, an In-35Bi-1Sb-0.5Sn alloy (hereinafter, the composition is referred to as a "second composition") disclosed in Example 8 of Table 1 of Patent Document 1, an In-35Bi-1.0Sb-3.0Sn alloy (hereinafter, the composition is referred to as a "third composition") disclosed in FIG. 7 of Patent Document 2, and a 65In-44Bi (balance)-0.5Sb-0.5Cu alloy (hereinafter, the composition is referred to as a "fourth composition") disclosed in paragraph 0021 of Patent Document 3 were examined. Note that, in Examples and Comparative Examples extracted from Patent Documents 1 to 3, when the element content is represented by an integer, the first decimal place is regarded as 0.

The first composition contains Zn, Sn, and Cu. It has been found that since the first composition contains Zn, the endothermic peak temperature increases. This is considered to be because both the solidus-line temperature and the liquidus-line temperature increase due to containing Zn, and thus the endothermic peak temperature also increases.

It is described that the In-Cu-Sb-Bi alloy not containing Sn disclosed in paragraph 0019 of Patent Document 3 can obtain desired creep characteristics and also has high fluidity when the alloy is filled, so that generation of voids and variations in strength can be suppressed. That is, in the second composition and the third composition containing Sn, it is presumed that when the alloy having a high content of In and Bi contains Sn, an Sn oxide film is formed during melting, and the fluidity of the molten alloy is reduced. Furthermore, the second composition was found to have a low Vickers hardness due to containing Sn.

In addition, since the fourth composition contains Cu, it has been found that the Vickers hardness is poor. This is presumed to be because a coarse compound containing Cu was precipitated.

Therefore, the present inventor has studied in detail an In-Bi-Sb alloy not containing Zn, Sn, and Cu. Specifically, based on a binary equilibrium state diagram of elements constituting this alloy, the contents of Bi and Sb were examined in detail so that the endothermic peak temperature was in the range of 85 to 90°C and the Vickers hardness was also improved.

As a result, it has been found that the endothermic peak temperature was 85 to 90°C when the contents of Bi and Sb were within a predetermined range. However, it has also been found that there is an alloy having a low Vickers hardness due to a low content of Sb even when the alloy has an endothermic peak temperature in this temperature range.

In order to improve the Vickers hardness in the In-Bi-Sb alloy having an endothermic peak temperature of 85 to 90°C, the present inventors have focused on the following points. Sb exists as InSb, and it is considered that precipitation of this compound contributes to an increase in Vickers hardness. InSb sufficiently remains until the melting start point (the temperature at which the fusible plug or the sprinkler head operates). Therefore, it is presumed that the Vickers hardness is maintained to a temperature slightly less than the temperature at which the fusible plug or the sprinkler head operates. The present inventor has studied in detail the contents of the respective constituent elements in view of the melting behavior of the alloy at such a temperature rise.

In order to improve the Vickers hardness, the present inventor has focused on increasing the precipitation amount of InSb, which is a hard compound, among compounds containing Bi, Sb, and In. However, it has been found that an alloy with high Sb content improves the Vickers hardness, but has an endothermic peak temperature more than 90°C. In addition, it has been found that the alloy in which the content of Bi is increased in order to increase the precipitation amount of $In_2Bi$ similarly improves the Vickers hardness, but also has an endothermic peak temperature more than 90°C.

As described above, in the case of obtaining an alloy having an endothermic peak temperature of 85 to 90°C, it has been found that the adjustment of the endothermic peak temperature in this temperature range and the high Vickers hardness tend to be contradictory to each other. Therefore, as a result of further detailed studies, the present inventors have obtained findings that an alloy having an endothermic peak temperature of 85 to 90°C and a high Vickers hardness can be obtained within an extremely narrow range of Bi and Sb contents, and the present invention has been completed. Along with this, it has also been found that a fusible plug having an operating temperature of 85 to 90°C and a sprinkler head having an operating temperature of 85 to 90°C can be obtained. The present inventions obtained from these findings are as follows.

(0) An alloy consisting of, by mass%, Bi: 47.0 to 49.0%, Sb: 0.8 to 1.2%, with the balance being In.
(1) An alloy having an alloy composition consisting of, by mass%, Bi: 47.0 to 49.0%, Sb: 0.8 to 1.2%, with the balance being In.
(2) A fusible plug comprising the alloy according to (0) or (1) above, wherein an operating temperature is 85 to 90°C.
(3) A sprinkler head comprising the alloy according to (0) or (1) above as a fusible alloy, wherein an operating temperature is 85 to 90°C.

Brief Description of Drawings

FIG. 1 is a view illustrating an example of a fusible plug according to the present embodiment, FIG. 1(a) is a top view, and FIG. 1(b) is a cross-sectional view taken along line A-A of FIG. 1(a).
FIG. 2 shows a ternary diagram of the alloy according to the present embodiment.

Description of Embodiments

The present invention will be described in greater detail below. In the present specification, "%" used for indicating an alloy composition is "mass%" unless otherwise specified.

1. Alloy

(1) Bi: 47.0 to 49.0%

Bi controls the endothermic peak temperature obtained from the DSC curve and also contributes to an increase in Vickers hardness. Bi can improve Vickers hardness by precipitation of $In_2Bi$. In addition, Bi can control the endothermic peak temperature by the precipitation amount of $In_2Bi$ and the melting timing at the time of melting the alloy. When the Bi content is more than 49.0%, due to an excessively large precipitation amount of $In_2Bi$, the endothermic peak temperature becomes more than 90°C. In terms of the upper limit, the Bi content is 49.0% or less, preferably 48.5% or less, and more preferably 48.0% or less.

On the other hand, when the Bi content is less than 47.0%, due to a small precipitation amount of $In_2Bi$, the endothermic peak temperature is less than 85°C and the Vickers hardness is also poor. In terms of the lower limit, the Bi content is 47.0% or more, preferably 47.5% or more.

The preferred range of Bi is 47.0 to 48.0%.

(2) Sb: 0.8 to 1.2%

Similarly to Bi, Sb controls the endothermic peak temperature obtained from the DSC curve and also contributes to an increase in Vickers hardness. Sb can improve Vickers hardness by precipitation of InSb. In addition, InSb remains sufficiently present up until the melting start point (the temperature at which the fusible plug and sprinkler head (hereinafter referred to as "fusible plug, etc." as appropriate) are operated). Therefore, it is possible to exhibit a function of maintaining the Vickers hardness to a temperature slightly less than the temperature at which the fusible plug, etc., operates. In addition, Sb can control the endothermic peak temperature by the precipitation amount of InSb and the melting timing at the time of melting the alloy.

When the Sb content is more than 1.2%, due to a large precipitation amount of InSb, the endothermic peak temperature becomes more than 90°C. In terms of the upper limit, the Sb content is 1.2% or less, preferably 1.1% or less, and more preferably 1.0% or less.

On the other hand, when the Sb content is less than 0.8%, InSb precipitation strengthening is not exhibited, and the Vickers hardness is poor. In terms of the lower limit, the Sb content is 0.8% or more, preferably 0.9% or more.

The preferred range of Sb is 0.9 to 1.1%.

(3) Balance: In

The balance of the alloy according to the present invention is In. In addition to the above-described elements, unavoidable impurity may be contained. The balance of the alloy according to the present invention may consist of In and unavoidable impurities. Even when unavoidable impurity is contained, this inclusion does not affect the effects described above. In addition, even when elements described below are contained as unavoidable impurities, this inclusion does not affect the effects described above.

Note that, the alloy according to the present invention does not contain Cu, Zn, and Sn. When Cu and Sn are contained, the operating temperature decreases, and the Vickers hardness is deteriorated. When Zn is contained, the operating temperature increases.

(3) Relations (1) and (2)

$$40.0 \leq Bi/Sb \leq 59.5 \qquad (1)$$

$$322 \leq (Bi+Sb) \times Vickers\ hardness \leq 352 \qquad (2)$$

where Bi and Sb in Relations (1) and (2) above represent the contents (mass%) thereof in the alloy composition.

The element constituting the alloy according to the present invention desirably has an operating temperature of 85 to 90°C when used in a fusible plug, etc., and a Vickers hardness of 6.7Hv or more. These depend on Bi and Sb constituting the alloy according to the present invention.

When the Vickers hardness of the alloy according to the present invention satisfies Relation (1), the precipitation amounts of $In_2Bi$ and InSb are appropriate, so that a high Vickers hardness of 6.7Hv or more can be obtained. In addition, since the alloy according to the present invention has an operating temperature of 85 to 90°C, which is in a slightly low temperature range, it is not necessary to increase the Vickers hardness more than necessary. When the balance between the total amount of elements caused by the Vickers hardness and the Vickers hardness satisfies Relation (2) within a predetermined operating temperature range, the alloy is considered to be a more desirable alloy for use in a fusible plug, etc., in the above operating temperature range.

In terms of the upper limit, Relation (1) is preferably 59.5 or less, more preferably 53.3 or less, still more preferably 49.0 or less, and particularly preferably 48.5 or less. In terms of the lower limit, Relation (1) is preferably 40.0 or more, more preferably 43.6 or more, still more preferably 47.0 or more, and further more preferably 47.5 or more.

A further preferred range of Relation (1) is 40.0 to 53.3, particularly preferably 47.0 to 48.0. The above upper limit and the lower limit can be each defined as a further preferable range of Relation (1).

In terms of the upper limit, Relation (2) is preferably 352 or less, more preferably 346 or less, still more preferably 338 or less, further more preferably 335 or less, particularly preferably 330 or less, and most preferably 326 or less. In terms of the lower limit, Relation (2) is preferably 322 or more, more preferably 323 or more, and still more preferably 324 or more.

A further preferred range of Relation (2) is 323 to 346, and particularly preferably 324 to 330. The above upper limit and the lower limit can each define a further preferable range of Relation (2).

In the calculation of Relations (1) and (2), the numerical values as shown in Table 1 below, which are measured values of the alloy composition, have been used. For the values calculated by Relations (1) and (2), Relation (1) calculates up to the first decimal place, and the Relation (2) calculates an integer value. This calculation rule is used in this application and further, is intended to be used as well for calculations relating to further alloys as described in other documents, etc., since all alloys must be handled in the same way.

2. Fusible Plug

The fusible plug according to the present invention is obtained by melting and sealing the alloy according to the present invention in a blank provided at a central portion of a blank material. Various forms of fusible plugs such as a single-screw type, a double-screw type, a flared pipe type, and a porous type are included from the shape of the blank material.

The fusible plug according to the present invention has an operating temperature of 85 to 90°C. When the operating temperature is in this temperature range, the refrigerant of R448A can be used. When the operating temperature is 90°C or less, it is possible to prevent an excessive increase in the internal pressure and safely release the internal pressure. In addition, when the operating temperature is 85°C or higher, malfunctions of the fusible plug can be prevented.

3. Sprinkler Head

The sprinkler head according to the present invention includes the alloy according to the present invention as a fusible alloy, and has an operating temperature of 85 to 90°C. The sprinkler head is provided on a ceiling of a building, etc., and is activated by heat due to a fire and sprays water to extinguish the fire. When the sprinkler head reaches the operating temperature due to a fire, etc., the fusible alloy constituting the heat-sensitive operation unit included in the sprinkler head dissolves, and the valve is opened to scatter water. As an example of a sprinkler head, a flush-type sprinkler head can be cited.

Examples

The present invention will be described based on the following examples, however, the present invention is not limited to the following examples.

In order to verify the effect of the present invention, the alloys described in Table 1 were used to evaluate (1) solidus-line temperature, peak temperature, and liquidus-line temperature, (2) operating temperature, and (3) Vickers hardness.

(1) Solidus-Line Temperature, Peak Temperature, and Liquidus-Line Temperature

Concerning the alloys having the respective alloy compositions described in Table 1, their temperatures were obtained from the DSC curves, respectively. The DSC curve was obtained with a DSC (model number: Q2000) manufactured by Seiko Instruments Inc., by raising the temperature at 5°C/min in the atmosphere. From the obtained DSC curve, a liquidus-line temperature was obtained. In addition, the solidus-line temperature was also evaluated from the DSC curve. Moreover, in the obtained DSC curve, the largest endothermic peak was determined as a peak temperature.

(2) Operating Temperature

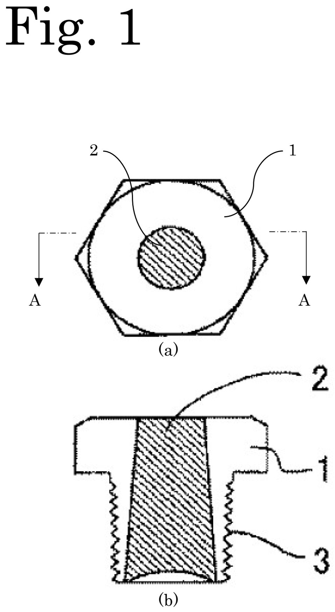

Using a single-screw type blank material 1 shown in FIG. 1, a blank provided at the center portion of the blank material 1 was filled with a molten alloy having each alloy composition shown in Table 1, and the blank was cooled to seal the blank, thereby preparing a fusible plug. The fusible plug was attached to a compressor via a screw portion 3, and a pressure of 3 MPa was applied. Next, the fusible plug connected to the compressor was put into the water tank, and the water in the water tank was heated. A temperature at which air was released from the fusible plug in the water tank at once was measured as an operating temperature. When the operating temperature was in the range of 85 to 90°C, it was determined that the desired operating temperature was obtained.

(3) Vickers Hardness

A sample obtained by processing a solder alloy having the alloy composition shown in Table 1 into a cylindrical shape of $\varphi 8$ mm $\times$ 12 mm was used. Using a micro Vickers hardness tester (HM-100 (manufactured by Mitutoyo Corporation)), this sample was measured at arbitrary 10 points under the conditions of a load of 25 g and a dwell time of 30 seconds at room temperature, and the average value thereof was taken as the Vickers hardness. When the Vickers hardness was 6.6 Hv or more, it was determined that a desired Vickers hardness was obtained.

Results are shown in Table 1.

[Table 1]

| | | Alloy composition (mass%) | | | | Evaluation 1 Melting temperature (°C) | | | Evaluation 2 Operating temperature (°C) | Evaluation 3 Vickers (Hv) | Overall Evaluation |
|---|---|---|---|---|---|---|---|---|---|---|---|
| | | In | Bi | Sb | Other elements | Solid Phase | Peak | Liquid Phase | | | |
| | Example 1 | 51.0 | 48.0 | 1.0 | | 88 | 90 | 92 | 90 | 6.7 | Good |
| | Example 2 | 51.5 | 47.5 | 1.0 | | 87 | 89 | 92 | 89 | 6.7 | Good |
| | Example 3 | 52.0 | 47.0 | 1.0 | | 86 | 88 | 90 | 88 | 6.7 | Good |
| | Example 4 | 50.5 | 48.5 | 1.0 | | 88 | 90 | 92 | 90 | 6.8 | Good |
| | Example 5 | 50.0 | 49.0 | 1.0 | | 88 | 90 | 92 | 90 | 6.9 | Good |
| | Example 6 | 51.2 | 48.0 | 0.8 | | 88 | 90 | 91 | 89 | 6.6 | Good |
| | Example 7 | 51.1 | 48.0 | 0.9 | | 88 | 90 | 91 | 89 | 6.7 | Good |
| | Example 8 | 50.9 | 48.0 | 1.1 | | 88 | 90 | 93 | 90 | 6.8 | Good |
| | Example 9 | 50.8 | 48.0 | 1.2 | | 88 | 90 | 93 | 90 | 6.9 | Good |
| | Comparative Example 1 | 52.6 | <u>46.4</u> | 1.0 | | 74 | 83 | 89 | <u>83</u> | 6.5 | Poor |
| | Comparative Example 2 | 49.5 | <u>49.5</u> | 1.0 | | 88 | 91 | 98 | <u>91</u> | 7.0 | Poor |
| | Comparative Example 3 | 51.3 | 48.0 | <u>0.7</u> | | 88 | 90 | 92 | 90 | 6.5 | Poor |
| | Comparative Example 4 | 50.7 | 48.0 | <u>1.3</u> | | 88 | 93 | 95 | <u>93</u> | 7.0 | Poor |
| | Comparative Example 5 | 63.5 | <u>35.0</u> | <u>1.5</u> | | 72 | 73 | 78 | <u>73</u> | 4.9 | Poor |
| | Comparative Example 6 | 65.0 | <u>34.0</u> | <u>0.5</u> | <u>Cu:0.5</u> | 72 | 73 | 77 | <u>73</u> | 5.4 | Poor |
| | Comparative Example 7 | 50.8 | 48.0 | 1.0 | <u>Zn:0.2</u> | 89 | 92 | 96 | <u>93</u> | 6.8 | Poor |
| | Comparative Example 8 | 61.0 | <u>35.0</u> | 1.0 | <u>Sn : 3.0</u> | 69 | 70 | 71 | <u>70</u> | 5.0 | Poor |
| | Comparative Example 9 | 63.5 | <u>35.0</u> | 1.0 | <u>Sn : 0.5</u> | 72 | 73 | 76 | <u>73</u> | 4.6 | Poor |

\* Underlined indicates that it is outside the scope of the present invention.

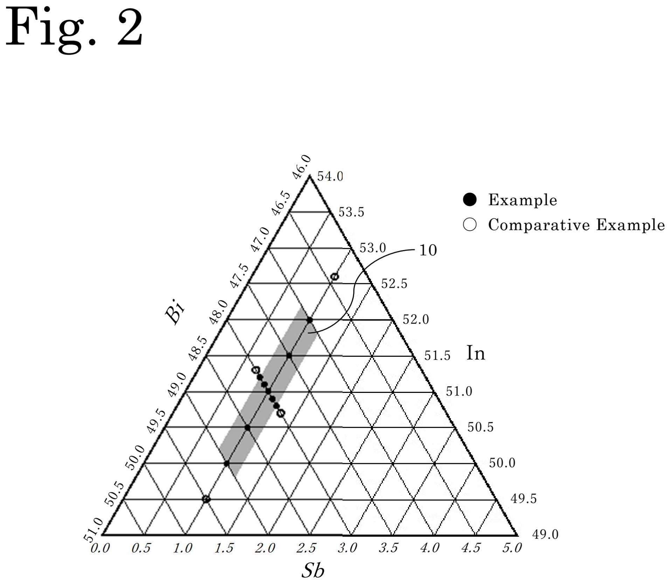

As is apparent from Table 1, in Examples 1 to 9, the operating temperature was in a range of 85 to 90°C, and the Vickers hardness was 6.6 Hv or more. FIG. 2 shows a ternary diagram of the alloy according to the present embodiment. In FIG. 2, Examples 1 to 9 and Comparative Example 1 to 4 are illustrated, and a solid circle (•) in the drawing indicates an example and a hollow circle (○) indicates a comparative example. Within a range 10 indicated by gray in FIG. 2, an alloy having an endothermic peak temperature of 85 to 90°C and a Vickers hardness of 6.6 Hv or more was obtained.

On the other hand, in Comparative Example 1, due to a low content of Bi, the operating temperature was less than 85°C, and the Vickers hardness was poor. In Comparative Example 2, due to a high content of Bi, the operating temperature was more than 90°C. In Comparative Example 3, due to a low content of Sb, the Vickers hardness was poor. In Comparative Example 4, due to a high content of Sb, the operating temperature was more than 90°C. In Comparative Example 5, due to a low content of Bi, the operating temperature was significantly less than 85°C, and due to a high content of In, the Vickers hardness was also poor.

In Comparative Example 6, due to low contents of Bi and Sb and Cu was contained, the operating temperature was less than 85°C, and the Vickers hardness was also poor. In Comparative Example 7, due to containing Zn, the operating temperature was more than 90°C. In Comparative Example 8 and Comparative Example 9, due to a low content of Bi and containing Sn, the operating temperature was less than 85°C, and the Vickers hardness was also poor.

Industrial Applicability

The alloy according to the present invention can be used not only as a fusible plug to be used in a protective device of a refrigeration apparatus but also as an alloy for a sprinkler head that is also constantly subjected to pressure. Specifically, the alloy according to the present invention can be used as a fusible alloy that is a component of a heat-sensitive operation unit incorporated in the sprinkler head.

Reference Signs List

1    Blank material
2    Alloy
3    Screw portion
10    Range

**Claims**

1.  An alloy having an alloy composition consisting of, by mass%, Bi: 47.0 to 49.0%, Sb: 0.8 to 1.2%, with the balance being In, and having a Vickers hardness of 6.6Hv or more.

2.  A fusible plug comprising the alloy according to claim 1, wherein an operating temperature is 85 to 90°C.

3.  A sprinkler head comprising the alloy according to claim 1 as a fusible alloy, wherein an operating temperature is 85 to 90°C.

# Fig. 1

(a)

(b)

# Fig. 2

Europäisches
Patentamt

European
Patent Office

Office européen
des brevets

# EUROPEAN SEARCH REPORT

**Application Number**

EP 25 21 7018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/148338 A1 (KATO RIKIYA [JP]; SENJU METAL INDUSTRY CO [JP] ET AL.) 11 June 2009 (2009-06-11) * claims 4-6; table 1 * | 1-3 | INV. C22C28/00 ADD. F16K25/00 F16K17/38 A62C37/12 |
| A | DE 10 2005 033428 A1 (UCHIHASHI ESTEC CO [JP]) 23 February 2006 (2006-02-23) * paragraph [0024]; claims 1-4 * | 1-3 | |
| A | KR 2022 0022434 A (MASTECO IND CO LTD [KR]) 25 February 2022 (2022-02-25) * paragraph [0094]; claim 1; example D * | 1-3 | |

**TECHNICAL FIELDS SEARCHED (IPC)**

C22C
A62C
F16K

The present search report has been drawn up for all claims

| Place of search | Date of completion of the search | Examiner |
|---|---|---|
| The Hague | 15 April 2026 | Pircher, Ernst |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 7018

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2026

| Patent document cited in search report | Publication date | Patent family member(s) | | Publication date |
|---|---|---|---|---|
| US 2009148338 A1 | 11-06-2009 | CN | 101180483 A | 14-05-2008 |
| | | JP | 4811672 B2 | 09-11-2011 |
| | | JP | WO2006112015 A1 | 27-11-2008 |
| | | US | 2009148338 A1 | 11-06-2009 |
| | | WO | 2006112015 A1 | 26-10-2006 |
| DE 102005033428 A1 | 23-02-2006 | CN | 1734695 A | 15-02-2006 |
| | | DE | 102005033428 A1 | 23-02-2006 |
| | | JP | 4410056 B2 | 03-02-2010 |
| | | JP | 2006049063 A | 16-02-2006 |
| | | US | 2006028315 A1 | 09-02-2006 |
| KR 20220022434 A | 25-02-2022 | KR | 102235204 B1 | 05-04-2021 |
| | | KR | 20220022434 A | 25-02-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4032094 B
- JP 2022137831 A
- JP 2011127776 A